# EUROPEAN PATENT APPLICATION

(11) **EP 4 749 583 A1**
(43) Date of publication of application: **27.05.2026**
(21) Application number: 25178523.4
(22) Date of filing: 23.05.2025
(51) Int. Cl.: G06V 10/82, G06V 20/59, B60W 50/14

(54) **METHOD, APPARATUS, AND SYSTEM FOR PREDICTING DRIVING RISK, VEHICLE AND STORAGE MEDIUM**

(30) Priority: 26.11.2024 CN 202411707056
(71) Applicant: XG TECH PTE. LTD., Singapore 179098 (SG)
(72) Inventor: YUE, Weixiang, 179098 Singapore (SG); DOU, Yuhao, 179098 Singapore (SG); SUN, Xiaolong, 179098 Singapore (SG); YANG, Xian, 179098 Singapore (SG)
(74) Representative: Epping - Hermann - Fischer

(57) **Abstract**

The embodiments of the present disclosure disclose a driving risk prediction method, apparatus, system, vehicle, and medium. The method includes: determining a dynamic object for a vehicle while driving; determining a first position of the dynamic object in the vehicle; determining, based on the first position and a structure of the vehicle, that the dynamic object corresponds to a first static object in the vehicle; and predicting a driving risk corresponding to the dynamic object based on an interactive action between the dynamic object and the first static object.

## Description

### FIELD OF THE PRESENT DISCLOSURE

The present disclosure relates to techniques of safe driving, three-dimensional reconstruction, and computer-aided driving, and more particularly to a method, apparatus, and system for predicting a driving risk, vehicle, and medium.

### BACKGROUND OF THE PRESENT DISCLOSURE

During a vehicle travelling, some dangerous actions or improper operations by a driver and a passenger may cause a safety risk. For example, if the driver takes his hands off a steering wheel, an accelerator may be mistakenly used as a brake, and so on may cause the safety risk. The current cockpit monitoring system has weak ability in monitoring and identifying these actions or operations, and cannot effectively identify dangerous actions or improper operations of the driver and passenger, so there is a certain safety risk.

### SUMMARY OF THE PRESENT DISCLOSURE

The present disclosure provides a method, apparatus, and system for predicting a driving risk, vehicle, and storage medium to efficiently identify dangerous actions of a dynamic object in a vehicle.

In a first aspect of the present disclosure, a method for predicting a driving risk is provided, including:
determining a dynamic object for a vehicle while driving;
determining a first position of the dynamic object in the vehicle;
determining, based on the first position and a structure of the vehicle, a first static object in the vehicle corresponding to the dynamic object; and
predicting the driving risk corresponding to the dynamic object based on an interactive action between the dynamic object and the first static object.

In a second aspect of the present disclosure, an apparatus for predicting a driving risk is provided, including:
a first determination module configured to determine a dynamic object for a vehicle while driving;
a second determination module configured to determine a first position of the dynamic object in the vehicle;
a third determination module configured to determine, based on the first position and a structure of the vehicle, a first static object in the vehicle corresponding to the dynamic object; and
a predictive module configured to predict the driving risk corresponding to the dynamic object based on an interactive action between the dynamic object and the first static object.

In a third aspect of the present disclosure, a system for predicting a driving risk is provided, including:
a first sensor disposed on a vehicle configured to acquire data for a dynamic object in the vehicle; and
the apparatus for predicting a driving risk according to the second aspect, configured to determine, based on data acquired by the first sensor for the dynamic object, the dynamic object for the vehicle while driving; determine a first position of the dynamic object in the vehicle; determining, based on the first position and a structure of the vehicle, a first static object in the vehicle corresponding to the dynamic object; and predict the driving risk corresponding to the dynamic object based on an interactive action between the dynamic object and the first static object.

In a fourth aspect of the present disclosure, a vehicle is provided, including: a processor, and a memory communicatively connected to the processor, further including the apparatus for predicting a driving risk according to the second aspect; wherein
the memory is configured to store processor-executable instructions; and
the processor is configured to read the executable instructions from the memory, and execute the instructions to control the apparatus to implement the method according to the first aspect of the present disclosure.

In a fifth aspect of the present disclosure, a computer-readable storage medium is provided, storing thereon a computer program which, when executed by a processor, causes the processor to perform the method according to the first aspect of the present disclosure.

In a sixth aspect of the present disclosure, a computer program product is provided which, when executed by an instruction processor in the computer program product, executes the method according to the first aspect of the present disclosure.

According to the embodiments of the present disclosure, detection of a dynamic object is first performed while driving of the vehicle, for example, the dynamic object may include a person or an object whose position may be moved, such as a driver and a passenger, the dynamic object while driving of the vehicle and a first position thereof in the vehicle are determined, then it is determined that the dynamic object corresponds to a first static object in the vehicle based on the first position and a structure of the vehicle, an interactive action between the dynamic object and the first static object is detected, and whether the interactive action is a dangerous action or not is identified. On this basis, it can be determined whether there is a safety risk of the dynamic object such as the driver and the passenger, so that when it is found that there is the safety risk, corresponding disposal measures can be taken in time to avoid the risk, thereby improving safety protection of the driver and the passenger.

### BRIEF DESCRIPTION OF THE DRAWINGS

FIG. 1 is a schematic flow chart illustrating a method for predicting a driving risk during vehicle travel according to an exemplary embodiment of the present disclosure.
FIG. 2 is a schematic flow chart illustrating a method for predicting a driving risk during vehicle travel according to another exemplary embodiment of the present disclosure.
FIG. 3 is a schematic flow chart illustrating a method for predicting a driving risk during vehicle travel according to another exemplary embodiment of the present disclosure.
FIG. 4 is a schematic flow chart illustrating a three-dimensional reconstruction in a method for predicting a driving risk during vehicle travel according to another exemplary embodiment of the present disclosure.
FIG. 5 is a schematic flow chart illustrating a three-dimensional reconstruction in a method for predicting a driving risk during vehicle travel according to another exemplary embodiment of the present disclosure.
FIG. 6 is a schematic flow chart illustrating a three-dimensional reconstruction in a method for predicting a driving risk during vehicle travel according to another exemplary embodiment of the present disclosure.
FIG. 7 is a schematic flow chart illustrating a method for predicting a driving risk during vehicle travel according to another exemplary embodiment of the present disclosure.
FIG. 8 is a schematic flow chart illustrating a process of three-dimensional reconstruction in a method for predicting a driving risk during vehicle travel according to another exemplary embodiment of the present disclosure.
FIG. 9 is a schematic flow chart illustrating a method for predicting a driving risk during vehicle travel according to another exemplary embodiment of the present disclosure.
FIG. 10 is a schematic flow chart illustrating a method for predicting a driving risk during vehicle travel according to another exemplary embodiment of the present disclosure.
FIG. 11 is a schematic flow chart illustrating a process of risk warning in a method for predicting a driving risk during vehicle travel according to another exemplary embodiment of the present disclosure.
FIG. 12 is a schematic flow chart illustrating a method for predicting a driving risk during vehicle travel according to another exemplary embodiment of the present disclosure.
FIG. 13 is a schematic system architecture diagram illustrating a method for predicting a driving risk according to another exemplary embodiment of the present disclosure.
FIG. 14 is a schematic flow chart illustrating a process of vehicle accident cause analysis in a method for predicting a driving risk during vehicle travel according to another exemplary embodiment of the present disclosure.
FIG. 15 is a schematic structural diagram illustrating an apparatus for predicting a driving risk during vehicle travel according to an exemplary embodiment of the present disclosure.
FIG. 16 is a schematic structural diagram illustrating an apparatus for predicting a driving risk during vehicle travel according to another exemplary embodiment of the present disclosure.
FIG. 17 is a schematic structural diagram illustrating an apparatus for predicting a driving risk during vehicle travel according to another exemplary embodiment of the present disclosure.
FIG. 18 is a schematic structural diagram illustrating an apparatus for predicting a driving risk during vehicle travel according to another exemplary embodiment of the present disclosure.
FIG. 19 is a structural diagram illustrating a vehicle according to an exemplary embodiment of the present disclosure.

### DESCRIPTION OF THE EMBODIMENTS

In order to explain the present disclosure, exemplary embodiments of the present disclosure will be described in detail below referring to the accompanying drawings. It is apparent that the described embodiments are only a part of the embodiments of the present disclosure, rather than all of them, and it is understood that the present disclosure is not limited to the example embodiments.

It should be noted that the relative arrangement of parts and steps, numerical expressions and numerical values set forth in these embodiments do not limit the scope of the present disclosure unless specifically stated otherwise.

### Application Overview

Current cockpit safety monitoring systems include a Driver Monitor System (DMS), an Occupancy Monitoring System (OMS), a Rear Monitoring System (RMS), etc. These systems have a weak ability to monitor and identify dangerous actions or improper operations, and cannot accurately reflect the real safety risks of drivers and passengers. For example, in the DMS system, taking a behavior of taking two hands off the steering wheel as an example, a monitoring party determines whether the driver's hands are off the steering wheel only by means of a pressure sensor provided on the steering wheel, and the driver can easily bypass this check by hanging a weight on the steering wheel.

### Exemplary method

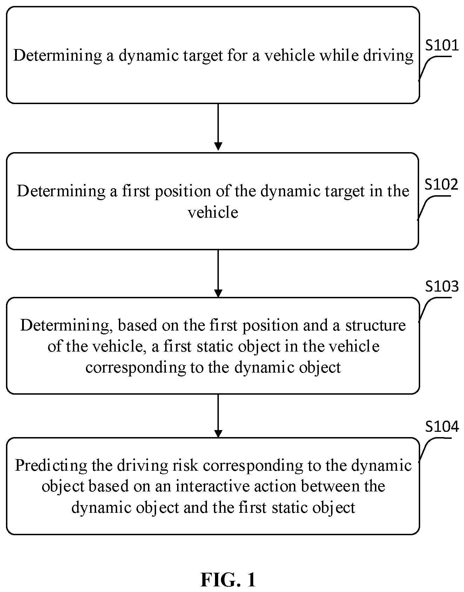

FIG. 1 is a schematic flow chart illustrating a method for predicting a driving risk during vehicle travel (hereafter also referred to as "a driving risk prediction method") according to an exemplary embodiment of the present disclosure. In addition to the vehicle, the method for predicting a driving risk during vehicle travel according to the present embodiment can be applied to a mobile device such as a flying device (e.g., an airplane, an aircraft), a watercraft, etc., and as shown in FIG. 1, the driving risk prediction method according to the present embodiment includes the following steps.

Step S101: determining a dynamic object for a vehicle while driving.

In order to ensure the driving safety during vehicle travel, the target object in the cockpit of the vehicle can be monitored. The target object may include a static object and a dynamic object. The static object includes a hardware system of the vehicle itself, such as seats, a steering wheel, an accelerator pedal, a brake pedal, etc. in the cockpit. The dynamic object may include people or objects other than static objects whose positions may be moved, such as a driver, passengers, and various belongings, etc. While driving of the vehicle, through a synchronous camera system in the cockpit, video information in the cockpit of the vehicle can be acquired in real time, and a moving target which moves in the video can be identified and located by a moving target detection algorithm, and the detected moving target is determined as the dynamic object while driving of the vehicle. For example, the driver and the passenger may make various actions of hands, feet or limbs while driving of the vehicle, and the driver and the passenger may be determined as dynamic objects of the vehicle while driving by performing moving target detection on video information in the cockpit of the vehicle.

Step S102: determining a first position of the dynamic object in the vehicle.

Through the synchronous camera system in the cockpit, after pre-calibration, the three-dimensional position coordinates of the dynamic object and the static object can be obtained, and the first position of the dynamic object in the vehicle can be determined from the three-dimensional position coordinates of the dynamic object.

Step S103: determining, based on the first position and a structure of the vehicle, a first static object in the vehicle corresponding to the dynamic object.

The structure of the vehicle may include layout information for various components of the hardware system of the vehicle, and in particular may include the appearance, position, and connection relationships of various static objects in the vehicle. In Step S103, a static object in contact with or close to the dynamic object may be found based on the first position and the structure of the vehicle, and the static object may be determined as the first static object in the vehicle corresponding to the dynamic object.

In an embodiment, the dynamic object in the driving risk prediction system, which is an executive subject of the driving risk prediction method according to the present disclosure, may be one passenger in the cockpit. By comparing the coordinates of the first position of the passenger determined in Step S102 with the position coordinates of each static object in the cockpit, it is known that the passenger is in direct contact with a seat numbered "05A", and the seat numbered "05A" is determined as the first static object corresponding to the dynamic object.

In another embodiment, the dynamic object in the driving risk prediction system may be the driver. By comparing the coordinates of the first position of the driver determined in Step S102 with the position coordinates of each static object in the cockpit of the vehicle, it can be known that the driver is in direct contact with the steering wheel and a main steering seat, and the feet of the driver are relatively close to the accelerator pedal and the brake pedal, therefore the steering wheel, the main steering seat, the accelerator pedal and the brake pedal are determined as the first static object corresponding to the dynamic object.

Step S104: predicting the driving risk corresponding to the dynamic object based on an interactive action between the dynamic object and the first static object.

Interactive actions between the dynamic object and the first static object may include prohibited dangerous actions. For example, when the first static object is the seat, the corresponding interactive action thereof may include an action of a dynamic object standing up away from the seat; when the first static object is a steering wheel, the corresponding interactive action thereof may include an action of the dynamic object, i.e., the driver taking his hands off the steering wheel. In addition, the interactive action between the dynamic object and the first static object may also include a possible misoperation behavior. For example, when the first static object is the accelerator pedal and the brake pedal, the corresponding interactive actions thereof include actions of stepping on the accelerator pedal and stepping on the brake pedal, respectively.

Specifically, the interactive action between the dynamic object and the first static object may be determined from the interaction information between the two, and the driving risk corresponding to the dynamic object may be predicted. The interaction information between the dynamic object and the first static object may include a positional relationship and a mutual action relationship therebetween, such as whether the dynamic object is in direct contact with the first static object, a distance between the dynamic object and the first static object, and a mutual action force between the dynamic object and the first static object. The mutual action force of the dynamic object with the first static object may be detected by using a force sensor.

In an embodiment, based on the interaction information such as whether the driver's hands are in direct contact with the steering wheel, a distance between the driver's hands and the steering wheel, and the mutual action force between the driver's hands and the steering wheel, and so on, it may be determined whether the driver has an interactive action of taking the hands off the steering wheel, thereby predicting whether the driver's above-described action may cause a safety risk.

In another embodiment, based on the interaction information such as whether the passenger's buttocks are in direct contact with the seat, a distance between the passenger's buttocks and the seat, the mutual action force between the passenger's buttocks and the seat, etc., it may be determined whether the passenger has an interactive action to standing up away from the seat, thereby predicting whether the passenger's above-mentioned action may cause a safety risk.

In summary, according to the embodiments of the present disclosure, detection of a dynamic object is first performed while driving of the vehicle, for example, the dynamic object may include a person or an object whose position may be moved, such as a driver and a passenger, the dynamic object while driving of the vehicle and a first position thereof in the vehicle are determined, then the first static object in the vehicle corresponding to the dynamic object is determined based on the first position and a structure of the vehicle, and an interactive action between the dynamic object and the first static object is detected, and whether the interactive action is a dangerous action or not is identified. On this basis, it can be determined whether there is a safety risk of the dynamic object such as the driver and the passenger, so that the corresponding disposal measures can be taken in time to avoid the safety risk when it is found that there is the safety risk, thereby improving safety protection of the driver and the passenger.

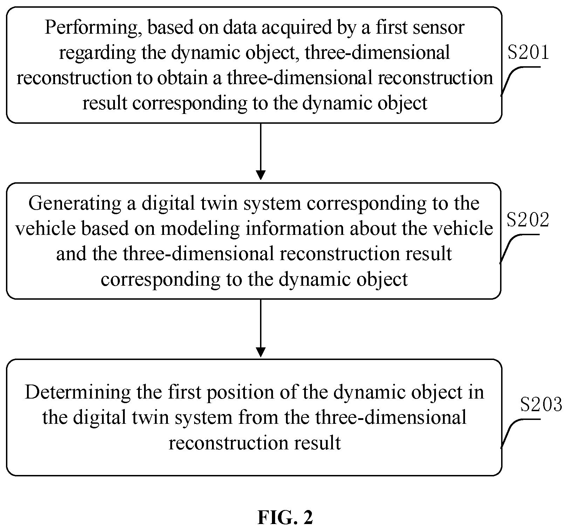

As shown in FIG. 2, based on the above-mentioned embodiment shown in FIG. 1, the Step S102 may include:
Step S201: performing, based on data acquired by a first sensor regarding the dynamic object, three-dimensional reconstruction to obtain a three-dimensional reconstruction result corresponding to the dynamic object.

The first sensor may include an image sensor. The real-time image data can be acquired by a plurality of image sensors mounted at different positions in the cockpit of the vehicle, and the accurate three-dimensional (3D) modeling results of the dynamic object can be obtained based on the acquired image data after pre-calibration. Under the condition that the system resources can meet the requirements, the real-time three-dimensional reconstruction of the dynamic object can be performed. In this step, the three-dimensional reconstruction can be performed on data acquired for the dynamic object based on the at least two first sensors to obtain a three-dimensional reconstruction result corresponding to the dynamic object.

Step S202: generating a digital twin system corresponding to the vehicle based on modeling information about the vehicle and the three-dimensional reconstruction result corresponding to the dynamic object.

The digital twin system simulate a physical entity, process or system in an information platform using a physical model and the data acquired by the sensors, thereby reflecting a whole life cycle process of the corresponding entity equipment.

Firstly, the three-dimensional reconstruction result of the static object is constructed based on modeling information about the vehicle. The static object may include 3D modeling information about the vehicle itself, which may be provided by an automobile manufacturer or obtained by means of laser scanning, etc., and the static objects of the same model may reuse the same 3D modeling information. For example, a laser sensor may be correspondingly arranged at a plurality of preset positions in the cockpit, 3D modeling information about the static object is acquired by using the laser sensor, and three-dimensional reconstruction is performed on the static object. After the position of the static object is fixed, three-dimensional reconstruction can be performed on the static object at least once. The three-dimensional position coordinates of the static object can be obtained from the three-dimensional reconstruction result.

The static object and the dynamic object together constitute the digital twin system corresponding to the vehicle, and the digital twin system corresponding to the vehicle can be generated based on the three-dimensional reconstruction results of the static object and the dynamic object. In an embodiment of the present disclosure, the digital twin system is a virtual representation of the vehicle to reflect the behavior, characteristics, and performance of the dynamic and static objects in the vehicle.

Step S203: determining the first position of the dynamic object in the digital twin system from the three-dimensional reconstruction result.

The three-dimensional position coordinates of the dynamic object can be obtained from the three-dimensional reconstruction result of the dynamic object in the digital twin system of the vehicle, and the three-dimensional position coordinates can represent the first position of the dynamic object in the digital twin system, that is, the first position of the dynamic object in the vehicle.

In the related art, the target object in the cockpit is monitored and discriminated based on a 2D image, by which it is difficult to obtain accurate depth information and cannot obtain high-precision results. It is very important to understand and represent a three-dimensional scene with the depth information, and a stereostructure and a spatial relationship of the object can be perceived with the depth information. In the embodiment of the present disclosure, the digital twin system of the vehicle is constructed based on the three-dimensional reconstruction result containing depth information, and the position coordinates of the dynamic object and the static object in the vehicle can be accurately acquired based on the vehicle-based digital twin system, so that the action of the dynamic object can be accurately discriminated.

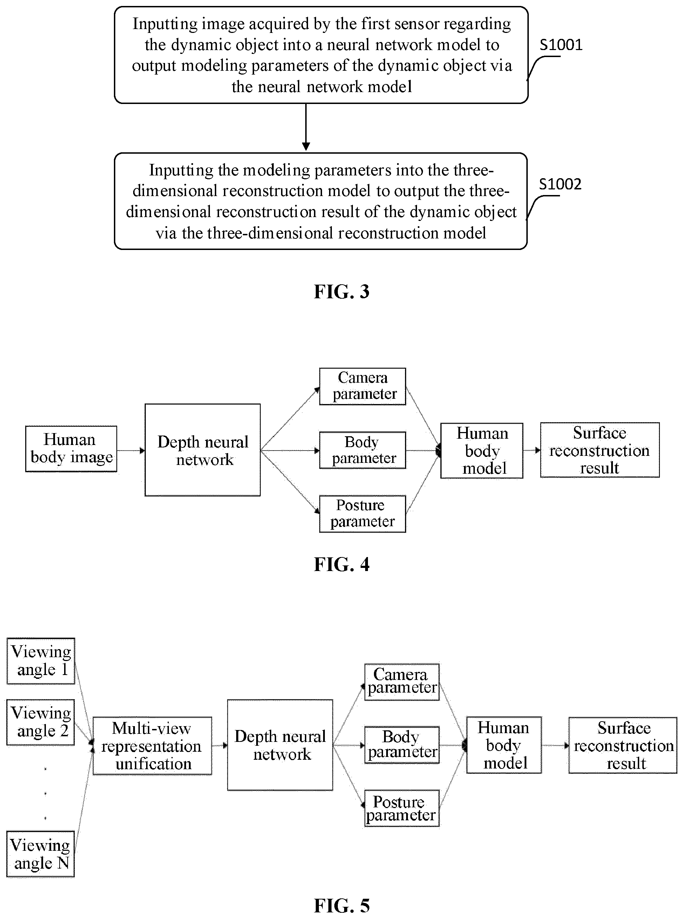

In an embodiment, as shown in FIG. 3, based on the above-mentioned embodiment shown in FIG. 2, the above-mentioned Step S201 may include the following steps:
Step S1001: inputting image acquired by the first sensor regarding the dynamic object into a neural network model to output a modeling parameter of the dynamic object via the neural network model; and
Step S1002: inputting the modeling parameter into the three-dimensional reconstruction model to output the three-dimensional reconstruction result of the dynamic object via the three-dimensional reconstruction model.

The modeling parameters include body parameters, posture parameters and camera parameters. The body parameters and posture parameters are used to represent the body characteristics and posture characteristics of the dynamic object. The camera parameters may include internal parameters (e.g., focal length, principal point coordinates) and external parameters (e.g., camera position and orientation) of the image, etc.

In Step S1001, the first image of the at least one dynamic object acquired by the first sensor is processed via the neural network model, to output the resultant modeling parameters of the dynamic object. In Step S1002, the three-dimensional reconstruction result of the dynamic object is output via the three-dimensional reconstruction model based on the modeling parameters.

The dynamic object in the driving risk prediction system may generally include a human body, and the three-dimensional reconstruction model in the above-mentioned step S1002 may include a human body model. The human body model is a digital simulation model of the human body established based on human body parameters, which can be used to accurately describe human morphological characteristics and mechanical characteristics. In this step, the human body model such as a Skinned Multi-Person Linear Model (SMPL), a Sparse Trained Articulated Human BodyRegressor (STAR), an SMPL eXpressive (SMPL-X) and a Model for Articulated Hands (MANO) can be used for three-dimensional reconstruction of the human body model.

In one example, the human reconstruction may be performed using a single-camera-based 3D human reconstruction on-line inference method. Referring to FIG. 4, a single human body image is input into the depth neural network model, and the body parameters and posture parameters of the human body, and camera parameters are predicted using the depth neural network model. Then the body parameters and posture parameters of the human body, and camera parameters are input into the human body model, human body surface level prediction is completed by using the human body model, and a distance between the static object and the human body surface can be predicted to obtain the three-dimensional reconstruction result of the human body. Based on the high-precision prediction result output by the above human body model, the motion of the dynamic object can be accurately identified in the subsequent steps to improve the safety protection of the driver and the passenger.

In another example, a multi-camera-based 3D human reconstruction on-line inference method may be used for human reconstruction. Referring to FIG. 5, the method using a plurality of images acquired by a multi-view camera as input information of a model is essentially similar to the monocular input method as shown in FIG. 4, with the difference in that an alignment step for multi-view representation unification is added into the flow of FIG. 5, so that features of multi-views can be unified in the same space. In addition, the multi-view input is not limited to an RGB image, and a resultant image by integrating RGB and the depth image may be used. Compared with the monocular method, the multi-view method can give the reconstruction results more stably and accurately based on the plurality of images acquired by multi-cameras.

According to the multi-view fusion method adopted in the flow of FIG. 5, a fusion step of multi-view representation unification is added to the whole algorithm flow, which is referred to as a mid-fusion method. The multiple steps in the mid-fusion method are an integral set of processes. In addition to the mid-fusion method, an early-fusion or late-fusion method may be used. The method of early-fusion is to perform a pre-process to do a view fusion separately, so as to unify the three views of the image together, and then directly input the fused image into the network. The late-fusion is to obtain one processing result for the image with each view, and then to fuse multiple processing results.

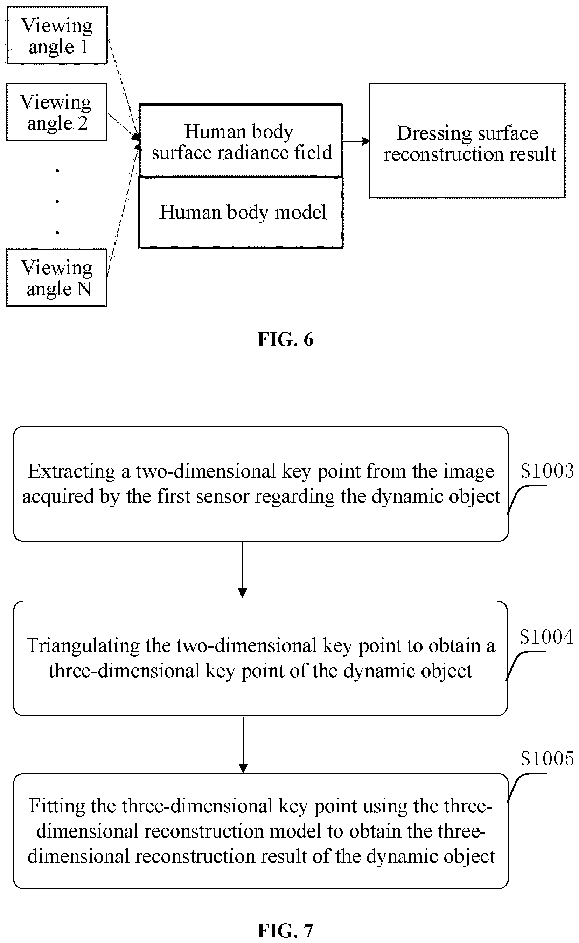

Referring to FIG. 6, in yet another example, the human body model may also be combined with a Neural Radiance Field (NERF) technology to perform three-dimensional reconstruction on the human body. The radiance field can describe the color and brightness information about the light in the three-dimensional space. The human body model is reconstructed to obtain a three-dimensional human body contour, with which dense three-dimensional points are defined on the surface of the human body. The neural radiance field maps, using the dense three-dimensional points of the human body surface defined by the human body model, the three-dimensional points into the radiance field to obtain the information about the clothing on the human body surface. That is to say, the information about human clothes is added to the human body contour surface by using the nerve radiance field, to obtain the surface reconstruction result of the dressing, thereby achieving more precise behavior discrimination and improving the accuracy of the three-dimensional reconstruction result.

In an embodiment, as shown in FIG. 7, based on the above-mentioned embodiment shown in FIG. 2, the above-mentioned Step S201 may include the following steps:
Step S1004: triangulating the two-dimensional key point to obtain a three-dimensional key point of the dynamic object; and
Step S1005: fitting the three-dimensional key point using the three-dimensional reconstruction model to obtain the three-dimensional reconstruction result of the dynamic object.

In the scene without real-time inference, such as static reconstruction of accident scene, the three-dimensional reconstruction of the dynamic object can be done by off-line fitting with multi-cameras to achieve an effect of more fitting and higher accuracy.

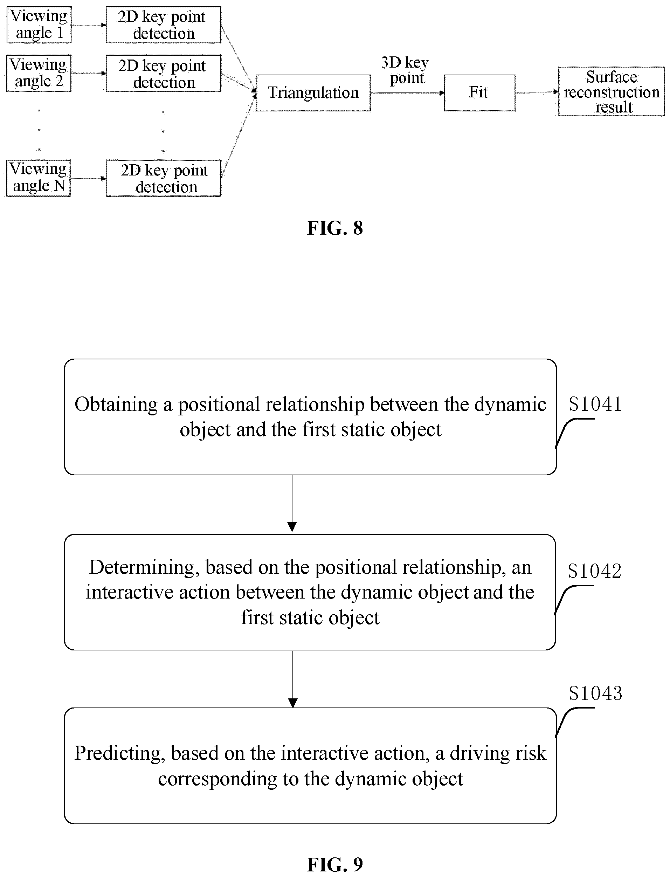

The dynamic object in the driving risk prediction system may typically include a human body. The first sensor may include a plurality of cameras provided at different positions within the cockpit of the vehicle, and multi-cameras may obtain a plurality of images of the dynamic object from a plurality of different orientations, respectively, for the same dynamic object. Referring to FIGS. 7 and 8, in Step S1003, human body posture estimation detection is performed on images obtained by cameras mounted at a plurality of different orientations to obtain 2D key points at the same position under multi-view angles. The triangulation processing in Step S1004 is a process to process a two-dimensional key point by using a triangulation technique, and obtain 3D coordinates of the position by converting the 2D key points into 3D key points with the triangulation technique based on the above-mentioned plurality of 2D key points. In one example, based on 2D key points at a certain position in the left shoulder images of a human body from the front, left, and right sides, an absolute 3D key point coordinates of that position can be obtained.

In Step S1005, according to the fitting process, the 3D key point coordinates are taken as a true value and target of the training to train the human body model to make it better fit the 3D key points. The human body model defines a series of dense points on the surface of the human body, and also defines some key points of driving. For example, a key point on the left shoulder may drive a number of dense points within the range of the left shoulder to move. If a key point on the left shoulder moves, it will drive a series of closely spaced points in the vicinity to move. In the fitting process, the key points in the human body model are made to be matched to the 3D key points obtained in Step S1004.

In contrast to the on-line process of FIGS. 4-6, the off-line process of FIG. 8 is shown in which the human body model itself is provided with modeling parameters. In the process of model training, the body parameters, posture parameters and camera parameters will be changed, so that the key points obtained by the human body model and the key points obtained by triangulation are closer and closer. In the process of model training, the modeling parameters are modified to make the two more matched. During fitting, the parameters of the human body model are modified according to the information about the 3D key points until appropriate parameter values are found, and then the surface reconstruction is performed based on these parameters to obtain a human body surface reconstruction result.

An online process differs from an offline process is in that: in the on-line process, the body parameters, posture parameters and camera parameters are obtained by the neural network, and the modeling parameters do not need to be changed and re-trained when used. However, in the off-line process, the modeling parameters are obtained by training, and the fitting method is used to change the modeling parameters and make them match as much as possible. The training process is a process that requires an loop of fitting and de-iteration. This process is relatively time-consuming and suitable for use in an off-line scenario without real-time inference. In contrast, the result of off-line fitting is more accurate and the effect of reconstructed image is more consistent based on the appropriate parameter values obtained by iteration.

In an embodiment, as shown in FIG. 9, based on the above-mentioned embodiment shown in FIG. 1, the above-mentioned Step S104 may include the following steps:
Step S1041: obtaining a positional relationship between the dynamic object and the first static object.

Specifically, the first position of the dynamic object in the digital twin system can first be determined from the three-dimensional reconstruction result of the dynamic object in the digital twin system of the vehicle. The position of the first static object corresponding to the dynamic object is then obtained in the digital twin system of the vehicle. Finally, the first position of the dynamic object is compared with the position of the first static object to obtain the positional relationship between the dynamic object and the first static object. For example, in a case where the dynamic object is a passenger, and it is determined that the corresponding first static object is a vehicle window, the positional relationship between the dynamic object and the first static object is obtained by comparing the position of the passenger's hands and the vehicle window, and in particular, it can be determined whether all or part of the passenger's hands are out of the vehicle window.

Step S1042: determining, based on the positional relationship, the interactive action between the dynamic object and the first static object.

In the above example, the interactive action between the dynamic object and the first static object may be determined based on the positional relationship that all or part of the hands of the passenger is out of the window, and in particular, the hands of the passenger extending out of the window may be determined as the interactive action.

Step S1043: predicting, based on the interactive action, a driving risk corresponding to the dynamic object.

In the example described above, based on the interactive actions of the passenger's hands extending out of the window, it can be predicted that the above actions of the passenger may cause a safety risk.

In yet another example, the interactive action between the dynamic object and the first static object may be determined from whether a positional relationship between the dynamic object and the first static object satisfies a preset condition. The preset condition may include that the distance between the dynamic object and the first static object is not within a reasonable preset range. If the condition is satisfied, an interactive action between the dynamic object and the first static object may be determined. Corresponding pre-set conditions may be set according to different first static objects. For example, in the driving risk prediction system of the vehicle, when the first static object is a vehicle window, the preset condition is set as the position of all or part of the key points on the dynamic object being out of the vehicle window. By comparing the coordinates of the first position of the passenger determined in Step S102 with the position coordinates of each static object in the cockpit, it is known that the position of the passenger and the window are relatively close to each other, the window is determined as the first static object corresponding to the dynamic object in Step S103. In Step S104, in response to detecting that the positions of all or part of the key points of the passenger's hands are out of the window, it is determined that the passenger's hands are out of the window, i.e., it may be determined that the passenger has an interactive action with the first static object, and on this basis, the driving risk that may be caused may be predicted.

In this embodiment, based on the positional relationship between the dynamic object and the first static object, the relevant pre-set conditions of the corresponding positional relationship are rationally set according to different first static objects, and the interactive action between the dynamic object and the first static object can be more accurately identified according to whether the positional relationship satisfies the pre-set condition, and on this basis, it can be determined whether there is a safety risk of the dynamic object such as the driver and the passenger to improve the safety protection of the driver and passenger.

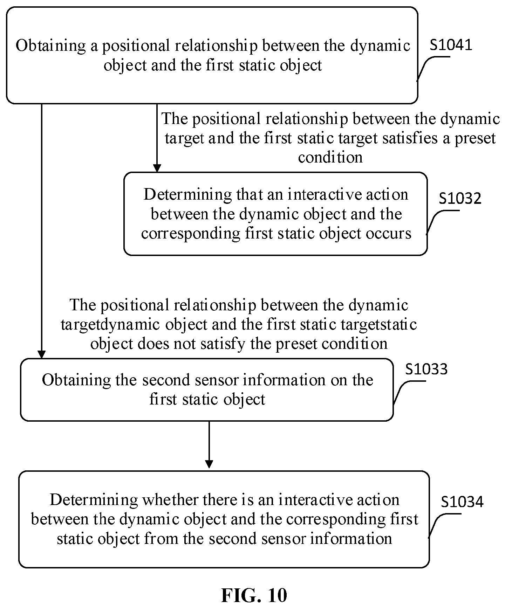

As shown in FIG. 10, based on the above-mentioned embodiment shown in FIG. 9, Step S1042 may include the following steps:
Step S1032: in response to the positional relationship satisfying the pre-set condition, determining that an interactive action between the dynamic object and the corresponding first static object occurs; or,
Step S1033: in response to the positional relationship not satisfying the pre-set condition, obtaining the second sensor information on the first static object; and
Step S1034: determining whether there is an interactive action between the dynamic object and the corresponding first static object from the second sensor information.

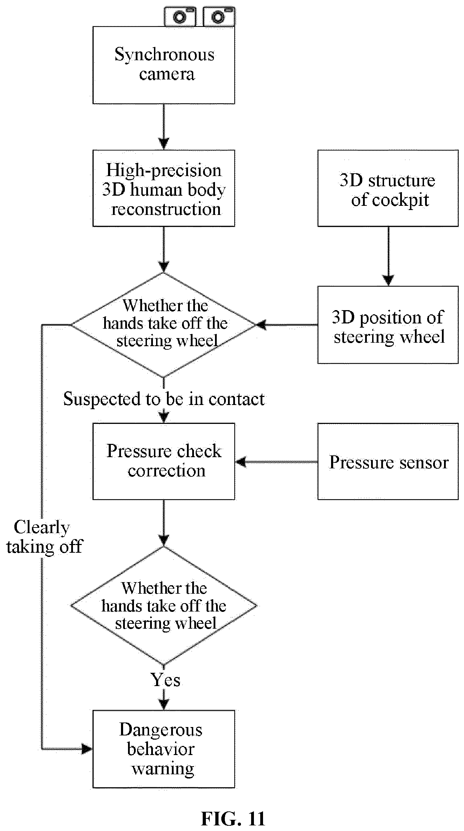

FIG. 11 is a schematic flow chart illustrating a risk warning of a driving risk prediction method used during vehicle travel according to another exemplary embodiment of the present disclosure. Referring to FIGS. 10 and 11, when multi-view synchronous cameras are acquiring an image in a cockpit in real time, a human body may be identified from the image acquired by the camera, and then various parts of the human body are reconstructed through a high-precision multi-view 3D human body reconstruction algorithm based on the human body image to further obtain a first position of a 3D human body in a cockpit 3D system. The 3D human reconstruction algorithms include, but are not limited to, SMPL series methods, NERF, 3D Gaussian Sputtering, 3D human posture estimation, etc. The steering wheel which is close to the position of the human hands can be determined as the first static object from the 3D structure information about the cockpit. The preset condition of the positional relationship corresponding to the steering wheel may be set such that the distance between the human hands and the steering wheel is greater than a certain preset threshold D. The interaction information between the human hands and the steering wheel is further obtained, for example, the positional relationship between the human hands and the steering wheel in a 3D space can be determined, and it is then preliminarily determined whether there is an interactive action of the human hands taking off the steering wheel.

Referring to FIGS. 10 and 11, if the distance between the human hands and the steering wheel is greater than or equal to the certain threshold D, the above-mentioned pre-set condition is satisfied, and it is determined that the human hands obviously take off the steering wheel, a dangerous behavior warning is immediately initiated; if the distance between the human hands and the steering wheel is less than the threshold D, the above-mentioned preset condition is not satisfied, and it is suspected to be a taking off state. The next step is to read the steering wheel pressure sensor information, i.e., to obtain the second sensor information on the first static object. According to the matching between the sensor pressed position and the suspected contact position, the result of whether the human hands take off the steering wheel is corrected. If the sensor pressed position and the suspected contact position are successfully matched, and the pressure sensor detects a pressure value greater than or equal to a preset threshold F, it is determined that there is no interactive action in which the human hands take off the steering wheel. If the sensor pressed position and the suspected contact position are not successfully matched, or the pressure sensor detects a pressure value smaller than a preset threshold F, it is determined that there is interactive action of the human hands taking off the steering wheel. And a warning is also initiated if it is determined that there has been an interactive action of the human hands taking off the steering wheel.

In this embodiment, the second sensor is used to acquire mutual action information such as pressure between the dynamic object and the first static object, and the positional relationship between the dynamic object and the first static object is combined with the second sensor information on the first static object, for example, the 3D position of the human body is combined with the sensor information on the first static object, and a comprehensive determination is performed in combination with the above-mentioned information to determine whether there is an interactive action between the dynamic object and the corresponding first static object, which can further ensure the accuracy of behavior determination.

In an embodiment, based on the above-mentioned embodiment shown in FIG. 1, after Step S104, the method further includes:
in response to determining that the dynamic object has a prohibited action, making an alert for the prohibited action.

The prohibited action may include dangerous actions that are not allowed to occur, such as the passenger extending his or her head or hands out of the window, the driver taking his hands off the steering wheel, etc. Referring to FIG. 11, when the prohibited action occurs on the dynamic object, an alert is given for the prohibited action, and relevant personnel are prompted to take corresponding disposal measures in time to avoid risks to improve the safety protection of the driver and passenger.

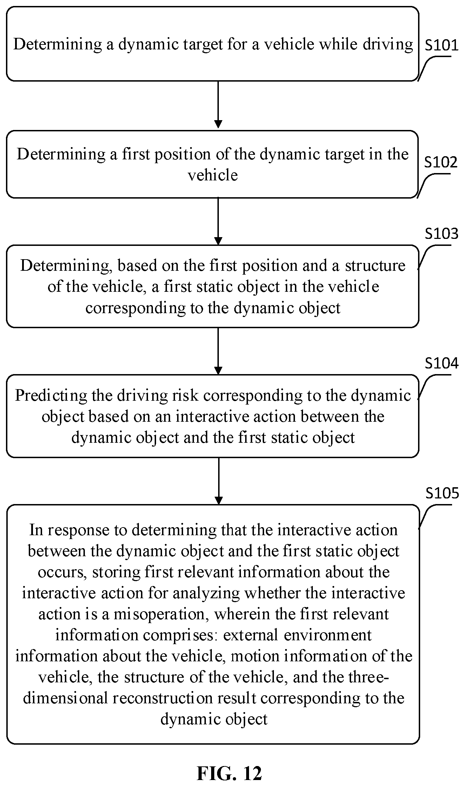

In an embodiment, as shown in FIG. 12, based on the above-mentioned embodiment shown in FIG. 1, after Step S104, the method further includes:
Step S105: in response to determining that the interactive action between the dynamic object and the first static object occurs, storing first relevant information about the interactive action for analyzing whether the interactive action is a misoperation, wherein the first relevant information comprises: external environment information about the vehicle, motion information of the vehicle, the structure of the vehicle, and the three-dimensional reconstruction result corresponding to the dynamic object.

The misoperation behavior and the prohibited action belong to two different interactive actions. For example, an action such as extending the head out of the window is a prohibited action. The allowed actions such as stepping on the accelerator can be divided into two cases; in the first case, stepping on an accelerator may be a correct operation; in the second case, when the brake should be stepped on, mistaking the accelerator as the brake is a misoperation behavior.

The external environment information about the vehicle may include road condition information about the vehicle, such as whether there is an obstacle target in front of the current vehicle, a distance between the obstacle target and the vehicle, etc. The motion information of the vehicle may include a speed, a position, an acceleration, etc. of the vehicle. The motion information and the external environment information may be acquired by a plurality of sensors provided inside and outside the vehicle.

If there is an interactive action between the dynamic object and the first static object, e.g. a driver pressing on the accelerator, the first relevant information about the interaction may be stored. The first relevant information about the action of stepping on the accelerator may include external environment information such as speed, position and acceleration of the vehicle, external environment information such as road condition information, the structure of the vehicle, and the three-dimensional reconstruction result of the driver. Based on the first relevant information stored above, it is possible to analyze whether the action of stepping on the accelerator is a misoperation behavior in the following scenario in which the cause of the accident needs to be analyzed.

In this embodiment, based on the pre-stored first relevant information about the interactive action, if an accident occurs, the accident process can be restored by reading the stored data, and then whether the interactive action belongs to a misoperation behavior can be determined, and the cause of the accident can be accurately identified based on the stored data to improve the accuracy and efficiency of the accident treatment.

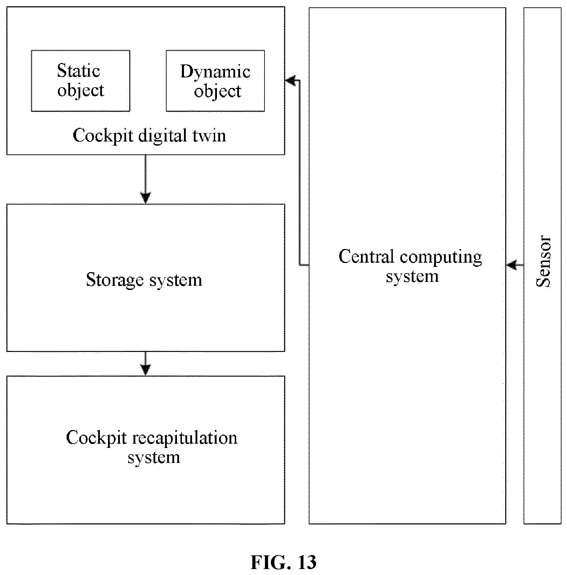

As shown in FIG. 13, in one example, a system architecture of a driving risk prediction system of a vehicle may include a cockpit digital twin system, a central computing system, a storage system, and a cockpit recapitulation system. The central computing system acquires the 3D information about the static and dynamic objects in the cockpit by acquiring the information about the first sensor, and constructs the digital twin system of the cockpit. It is determined from the 3D position of the dynamic object in the cockpit system and the interaction information with the first static object whether there is a prohibited action with a safety risk while driving, and whether there is a case where the driver operates by mistake. The components of the system architecture are described in detail as follows:
1) Cockpit digital twin system: the static and dynamic objects constitute the cockpit digital twin system. Through the cockpit digital twin system, the 3D interaction information between dynamic objects such as a passenger or a driver and the cockpit can be obtained, and then whether there are dangerous behaviors that may cause safety risks can be determined.
2) Central computing system: the system may be an Artificial Intelligence (AI) computing center of an automotive vehicle. The system reconstructs the system in the cockpit by calling a vehicle-wide sensor, and constructs the digital twin system in the cockpit. The vehicle-wide sensor includes a DMS/OMS camera, a lidar, an RGBD camera, a Time of Flight (ToF), a pressure sensor, etc.
3) Storage system: the system receives vehicle travel information, such as vehicle speed, sensor information, and information about the reconstructed cockpit digital twin system of the central computing system, and stores the information separately. The data within the system can be read by a user for analysis of a cause of the accident after the accident has occurred, which acts like a "black box" mounted on an aircraft. The storage system may be located in the safest position of the bodywork and protected by high-temperature-and-impact resistant materials, with the internal data set to be readable but not manually modifiable by the user to avoid malicious tampering or accidental loss.
4) Cockpit recapitulation system: the system is a set of software systems that are also suitable for use in vehicles such as airplanes and may not be mounted directly on a traveling vehicle, e.g., the system may be located on a remote server, similar to a ground monitoring center. The cockpit recapitulation system can directly call to read the data in the storage system, and reconstruct all the information in the cockpit at high frequency to reconstruct the process of driving or accident. After an accident occurs, the cause of the accident can be analyzed by the system.

In an embodiment, based on the embodiment shown in FIG. 12, the method further includes:
in response to receiving an acquisition request of a user, obtaining second relevant information corresponding to an acquisition condition of the acquisition request from the first relevant information; and
determining, based on the second relevant information, whether there is a misoperation.

In the above-mentioned step S105, the first relevant information about the interactive action is pre-stored, and after the accident occurs, the user may request to acquire the first relevant information about the interactive action generated during an accident occurrence period. In response to receiving the user's acquisition request, second relevant information corresponding to the acquisition conditions of the acquisition request may be acquired by the driving risk prediction system from the first relevant information, that is, the first relevant information generated during the accident occurrence period, and it is then determined whether there is the misoperation behavior of the dynamic object from the information.

For example, if, as shown in the second relevant information, there is an obstacle target in front of the current vehicle and the distance between the obstacle target and the vehicle is very close, and a speed of the current vehicle is very fast, the correct operation in this case should be an operation of stepping on the brake. If it is detected that the driver has stepped on the accelerator at this time, it can be determined that the driver's stepping on the accelerator is a misoperation behavior.

In summary, based on the first relevant information about the interactive action pre-stored in the storage system, if an accident occurs, the driving risk prediction system can restore the accident process by reading the stored data, and determine whether the interactive action belongs to the misoperation behavior by analyzing the stored data, which can improve the accuracy and efficiency of the accident treatment.

In one aspect, the above flow of recovering the accident and behavior determination may be performed in a driving risk prediction system provided in the vehicle; in another aspect, the above process of restoring accident and behavior determination may also be performed in a cockpit recapitulation system located on the remote server.

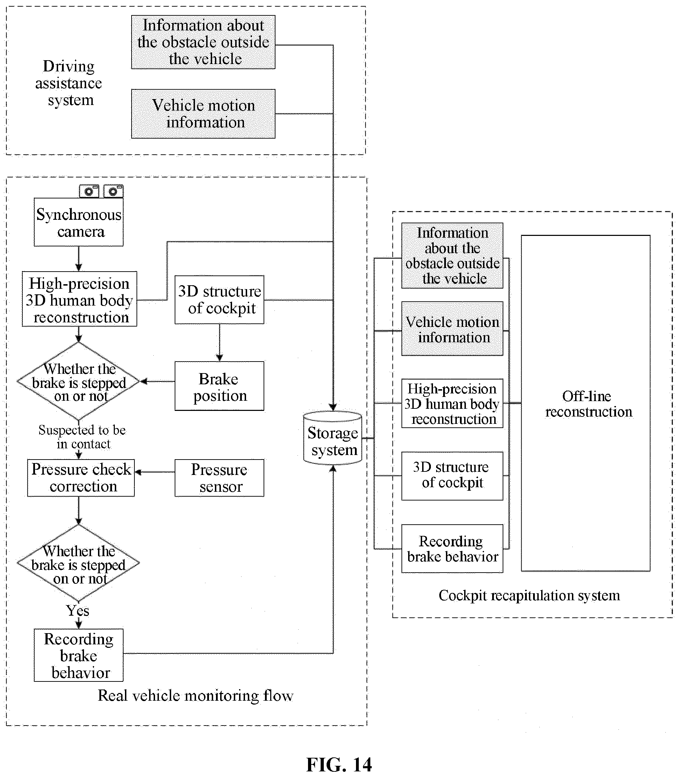

FIG. 14 is a schematic flow chart illustrating a vehicle accident cause analysis of a driving risk prediction method according to another exemplary embodiment of the present disclosure. In one example of a traffic accident, when a current vehicle collides with an obstacle vehicle in front, it is necessary to determine whether the driver has a behavior of stepping on the brake in order to determine the cause of the accident. A left-hand dashed box in FIG. 14 shows a real vehicle monitoring flow with which the behavior of the dynamic object can be monitored in real time while the vehicle is traveling. Firstly, the synchronous camera is used to acquire the human body data, and the high-precision 3D human body reconstruction result is obtained based on the human body data. Then, it is determined from the human body reconstruction result, 3D structure information about the cockpit, pressure sensor information about a brake pedal, information about an obstacle outside the vehicle and vehicle motion information acquired in the driving assistance system whether the user has the behavior of stepping on the brake. The information about the obstacle outside the vehicle can be acquired by using a vehicle radar or a camera; the vehicle motion information, such as the vehicle speed, is detected by the sensor.

Specifically, referring to FIG. 14, first, the positional relationship between the driver's foot and the brake pedal can be determined from the human body reconstruction result and the brake position of the brake pedal in the 3D structure information about the cockpit. If the positional relationship satisfies the preset condition, for example, the distance between the driver's foot and the brake pedal is less than or equal to a certain threshold, it can be determined that the driver has a behavior of stepping on the brake. If the positional relationship does not satisfy the preset condition, only the conclusion that the driver's foot is suspected to be in contact with the brake position can be obtained. Further, the pressure sensor information about the brake position can be acquired, and it can be determined whether the driver has the behavior of stepping on the brake in combination with the pressure sensor information. In a case where it is detected that the brake position is subjected to a large pressure, it is determined that the driver has the behavior of stepping on the brake, otherwise, it is determined that the driver has no behavior of stepping on the brake.

After an interactive action of a dynamic object is monitored in a real vehicle monitoring flow, first relevant information about the interactive action is saved in the storage system. The storage system may be provided in a memory external to the ground. The first relevant information includes: information about obstacles outside the vehicle, vehicle motion information, 3D human body reconstruction results, 3D structure about the cockpit and recorded behavior of stepping on the brake, etc.

The flow of the cockpit recapitulation system is as shown in a right-hand dashed box in FIG. 14. After the accident occurs, the cockpit recapitulation system reads the historical data of the vehicle before the accident from the storage system, and reconstructs the accident process. In one implementation, the reconstruction process may use the same process as that of the real vehicle monitoring process, i.e., an on-line inference method similar to that shown in FIGS. 4-6. In another implementation, the reconstruction process may also use the off-line fitting as shown in FIG. 8. In comparison, a more accurate reconstruction result can be obtained by using the off-line fitting.

In the above-described example of a traffic accident, when a current vehicle collides with an obstacle vehicle in front, it is necessary to determine whether the driver has a behavior of stepping on the brake, and to determine the cause of the accident on that basis. For example, the cockpit recapitulation system reconstructs the accident process, and determines that the driver has a behavior of stepping on the brake based on the reconstruction result, but determines that the vehicle is not decelerated from the acquired vehicle motion information, and then it can be determined therefrom that the accident liability may be a brake apparatus failure, and the behavior of stepping on the brake of the driver is a correct operation.

In summary, by means of the above-mentioned reconstruction method in the cockpit recapitulation system, the historical data before the vehicle accident is read from the storage system, and the accident process is reconstructed. Based on the reconstruction result, whether there is a user's misoperation behavior when the accident occurs can be accurately determined to avoid an accident dispute and improve the fairness, accuracy and efficiency of the accident treatment.

### Exemplary apparatus

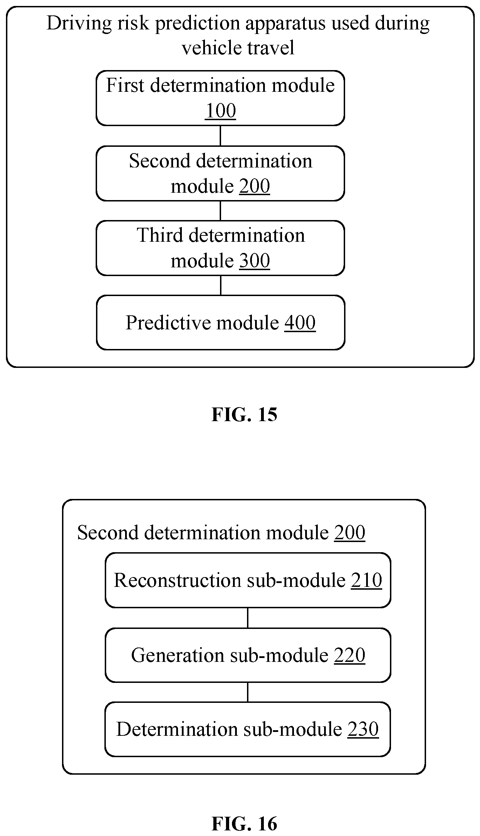

As shown in FIG. 15, the present disclosure further provides a corresponding embodiment of a driving risk prediction apparatus used during vehicle travel. In the embodiment of the driving risk prediction apparatus used during vehicle travel, the apparatus includes:
a first determination module 100 configured to determine a dynamic object for the vehicle while driving;
a second determination module 200 configured to determine a first position of the dynamic object in the vehicle;
a third determination module 300 configured to determine, based on the first position and a structure of the vehicle, a first static object in the vehicle corresponding to the dynamic object; and
a predictive module 400 configured to predict a driving risk corresponding to the dynamic object based on an interactive action between the dynamic object and the first static object.

As shown in FIG. 16, in an embodiment, the second determination module 200 may include:
a reconstruction sub-module 210 configured to perform, based on data acquired by a first sensor regarding the dynamic object, three-dimensional reconstruction to obtain a three-dimensional reconstruction result corresponding to the dynamic object;
a generation sub-module 220 configured to generate a digital twin system corresponding to the vehicle based on modeling information about the vehicle and the three-dimensional reconstruction result corresponding to the dynamic object; and
a determination sub-module 230 configured to determine the first position of the dynamic object in the digital twin system from the three-dimensional reconstruction result.

In an embodiment, the reconstruction sub-module 210 is configured to
input at least one first image acquired by the first sensor regarding the dynamic object into a neural network model, and output modeling parameters of the dynamic object via the neural network model; and
input the modeling parameters into the three-dimensional reconstruction model, and output the three-dimensional reconstruction result of the dynamic object via the three-dimensional reconstruction model.

In an embodiment, the reconstruction sub-module 210 is configured to
extract a two-dimensional key point from the image acquired by the first sensor regarding the dynamic object;
triangulate the two-dimensional key point to obtain a three-dimensional key point of the dynamic object; and
fit the three-dimensional key point using the three-dimensional reconstruction model to obtain the three-dimensional reconstruction result of the dynamic object.

In an embodiment, the predictive module 400 is configured to,
obtain a positional relationship between the dynamic object and the first static object;
determine, based on the positional relationship, an interactive action between the dynamic object and the first static object; and
predict, based on the interactive action, a driving risk corresponding to the dynamic object occurring in a scenario corresponding to the first static object.

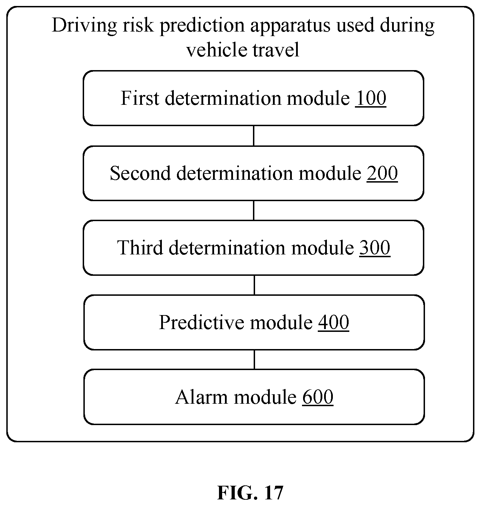

As shown in FIG. 17, in an embodiment, the apparatus may further include an alarm module 600 configured to,
after predicting the driving risk corresponding to the dynamic object, in response to determining that a prohibited behavior has occurred for the dynamic object, make an alert for the prohibited action.

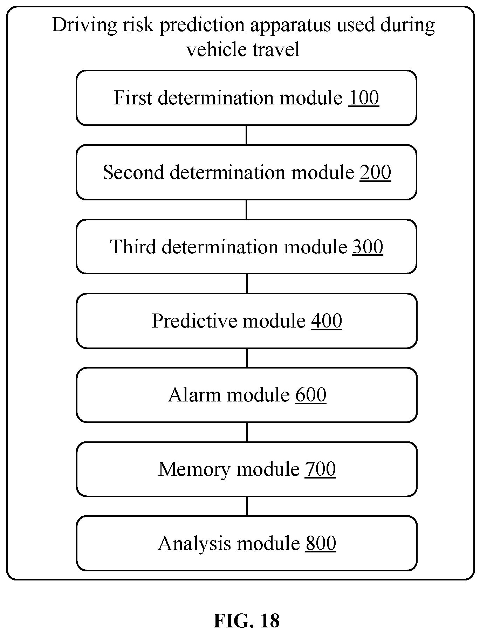

As shown in FIG. 18, in an embodiment, the apparatus may further include a storage module 700 configured to,
after predicting the driving risk corresponding to the dynamic object, in response to that the interactive action between the dynamic object and the first static object occurs, store first relevant information about the interactive action for analyzing whether the interactive action is a misoperation, the first relevant information including: external environment information about the vehicle, motion information of the vehicle, the structure of the vehicle, and the three-dimensional reconstruction result corresponding to the dynamic object.

As shown in FIG. 18, in an embodiment, the apparatus described above may further include an analysis module 800 configured to,
in response to receiving an acquisition request of a user, obtain second relevant information corresponding to an acquisition condition of the acquisition request from the first relevant information; and
determine whether there is the misoperation based on the second relevant information.

Advantageous technical effects corresponding to example embodiments of the apparatus may be seen in the respective advantageous technical effects of the above section "Exemplary method" described above and will not be described in detail here.

### Exemplary system

The present disclosure further provides a corresponding embodiment of a system for predicting a driving risk (also referred to as a driving risk prediction system) used during vehicle travel. In an embodiment of the driving risk prediction system used during vehicle travel, the system includes:
a first sensor disposed on the vehicle configured to acquire data for a dynamic object in the vehicle; and
the driving risk prediction apparatus used during vehicle travel is configured to determine, based on data acquired by the first sensor for the dynamic object, the dynamic object for the vehicle while driving; determine a first position of the dynamic object in the vehicle; determine a first position of the dynamic object in the vehicle; and predict, based on an interactive action between the dynamic object and the first static object, a driving risk corresponding to the dynamic object.

In an embodiment, the vehicle includes a plurality of first static objects, and at least one second sensor disposed on each of the first static objects, the at least one second sensor being configured to acquire second sensor information corresponding to the first static object.

In an embodiment, the driving risk prediction apparatus used during vehicle travel is further configured to perform, based on the first sensor, three-dimensional reconstruction on data acquired for the dynamic object to obtain a three-dimensional reconstruction result corresponding to the dynamic object; generate a digital twin system corresponding to the vehicle based on modeling information about the vehicle and the three-dimensional reconstruction result corresponding to the dynamic object; and
the above-described driving risk prediction system used during vehicle travel may further include: a storage unit configured to store data of the digital twin system.

In an embodiment, the above-described driving risk prediction system used during vehicle travel may further include:
at least one third sensor disposed on the vehicle for acquiring external environment information about the vehicle; and
at least one fourth sensor disposed on the vehicle for acquiring motion information of the vehicle;

The driving risk prediction apparatus used during vehicle travel is further configured to, in response to the interactive action between the dynamic object and the first static object, store first relevant information about the interactive action for analyzing whether the interactive action is a misoperation, the first relevant information including: external environment information about the vehicle, motion information of the vehicle, the structure of the vehicle, and the three-dimensional reconstruction result corresponding to the dynamic object.

In an embodiment, the driving risk prediction apparatus used during vehicle travel is further configured to,
in response to receiving an acquisition request of a user, obtain second relevant information corresponding to an acquisition condition of the acquisition request from a storage unit; and determine, from the second correlation information, whether there is a misoperation.

The exemplary embodiments of the present disclosure of the driving risk prediction method used during vehicle travel, the driving risk prediction apparatus used during vehicle travel, and the driving risk prediction system used during vehicle travel correspond to each other, and may be referred to, cited, or not described in detail with respect to each other in corresponding implementations. The central computing system of the driving risk prediction system used during vehicle travel provided by the exemplary embodiments of the present disclosure may include the driving risk prediction apparatus used during vehicle travel provided by the exemplary embodiments of the present disclosure; or, the above-described central computing system is configured as the driving risk prediction apparatus used during vehicle travel provided by the exemplary embodiments of the present disclosure, for implementing the driving risk prediction method used during vehicle travel provided by the exemplary embodiments of the present disclosure.

Advantageous effects corresponding to the exemplary embodiments of the present disclosure of the driving risk prediction method used during vehicle travel, the driving risk prediction apparatus used during vehicle travel, and the driving risk prediction system used during vehicle travel may also be referred to each other, and will not be described in detail.

### Exemplary vehicle

The present disclosure further provides a corresponding embodiment of a vehicle.

In an embodiment of the vehicle, the vehicle includes a processor, and a memory communicatively connected to the processor, and further includes the driving risk prediction apparatus used during vehicle travel;
the memory is configured to store the processor-executable instructions; and
the processor is configured to read the executable instructions from the memory, and execute the instructions to control the driving risk prediction apparatus used during vehicle travel to implement the driving risk prediction method used during vehicle travel.

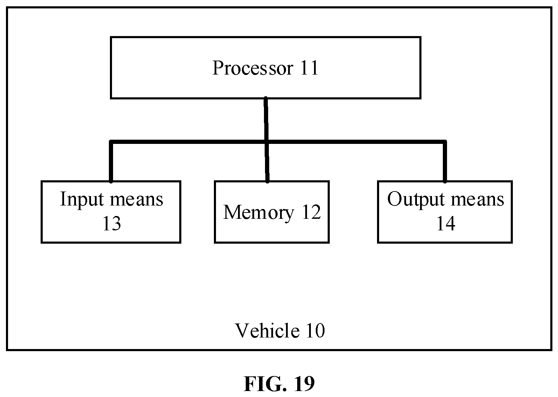

FIG. 19 is a block diagram illustrating a vehicle including at least one processor 11 and a memory 12 according to an embodiment of the present disclosure.

The processor 11 may be a central processing unit (CPU) or other form of processing unit having data processing capabilities and/or instruction execution capabilities, and may control other components in the vehicle 10 to execute desired functions.

The memory 12 may include one or more computer program products, which may include various forms of computer-readable storage media, such as volatile memory and/or non-volatile memory. The volatile memory may for example include a random-access memory (RAM) and/or a cache memory (cache) etc. The non-volatile memory may include, for example, a read only memory (ROM), a hard disk, a flash memory, etc. One or more computer program instructions may be stored on a computer-readable storage medium, and the processor 11 may execute one or more computer program instructions to implement the driving risk prediction method used during vehicle travel and/or other desired functions of the various embodiments of the present disclosure hereinabove.

In one example, the vehicle 10 may further include: input means 13 and output means 14, which are interconnected by a bus system and/or other form of connection mechanism (not shown).

The input means 13 may include, for example, a keyboard, a mouse, etc.

The output means 14 may output various information to the outside, which may include, for example, a display, a speaker, a printer, and a communication network and its connected remote output devices, etc.

Of course, for simplicity, only some of the components of the vehicle 10 relevant to the present disclosure are shown in FIG. 19, omitting components such as buses, input/output interfaces, etc. In addition, the vehicle 10 may include any other suitable components, depending on the particular application.

### Exemplary computer program product and computer-readable storage medium

In addition to the methods and devices described above, in embodiments of the present disclosure, there may further be provided a computer program product including computer program instructions which, when executed by a processor, cause the processor to perform the steps in the driving risk prediction method used during vehicle travel of various embodiments of the present disclosure described in the "Exemplary Methods" section above.

The computer program product may include program code for performing operations of embodiments of the present disclosure written in any combination of one or more programming languages, including object-oriented programming languages, such as Java, C++, etc. and further including conventional procedural programming languages, such as the "C" language or similar programming languages. The program code may execute entirely on the user computing device, partially on the user device, as a stand-alone software package, partially on the user computing device, partially on a remote computing device, or entirely on the remote computing device or server.

Furthermore, in embodiments of the present disclosure, there may be provided a computer-readable storage medium having stored thereon computer program instructions which, when executed by a processor, cause the processor to perform the steps in the driving risk prediction method used during vehicle travel of the various embodiments of the present disclosure described in the "Exemplary Methods" section above.

The computer-readable storage medium may take any combination of one or more readable media. The readable medium may be a readable signal medium or a readable storage medium. The readable storage medium for example but not limited to, an electronic, magnetic, optical, electromagnetic, infrared, or semiconductor system, apparatus, or component, or a combination of any one of the foregoing. More specific examples (a non-exhaustive list) of the readable storage medium include: an electrical connection having one or more wires, a portable computer diskette, a hard disk, a Random-access Memory (RAM), a read-only memory (ROM), an Erasable Programmable Read-only Memory (EPROM or flash memory), an optical fiber, a portable Compact Disk Read-only Memory (CD-ROM), an optical storage component, a magnetic storage component, or any suitable combination thereof.

The general principles of the present disclosure have been described above in connection with specific embodiments, the advantages, advantages, effects, etc. set forth in the present disclosure are merely illustrative and not limiting, and are not to be construed as necessarily referring to the various embodiments of the present disclosure. Furthermore, the particular details disclosed above are for purposes of illustration and description only and are not intended to be limiting, as the present disclosure is not limited to the particular details disclosed above.

Various modifications and alterations to the present disclosure will become apparent to a person skilled in the art without departing from the spirit and scope of the present application. Thus, in case the modifications and variations of the present application are within the scope of the claims and their equivalents, it is intended that the modifications and variations are included in the present disclosure.

## Claims

1. A method for predicting a driving risk, **characterized by** comprising:
determining (S101) a dynamic object for a vehicle while driving;
determining (S102) a first position of the dynamic object in the vehicle;
determining (S103), based on the first position and a structure of the vehicle, a first static object in the vehicle corresponding to the dynamic object; and
predicting (S104) the driving risk corresponding to the dynamic object based on an interactive action between the dynamic object and the first static object.

2. The method according to claim 1, wherein the determining (S102) a first position of the dynamic object in the vehicle comprises:
performing (S201), based on data acquired by a first sensor regarding the dynamic object, three-dimensional reconstruction to obtain a three-dimensional reconstruction result corresponding to the dynamic object;
generating (S202) a digital twin system corresponding to the vehicle based on modeling information about the vehicle and the three-dimensional reconstruction result corresponding to the dynamic object; and
determining (S203) the first position of the dynamic object in the digital twin system from the three-dimensional reconstruction result.

3. The method according to claim 2, wherein the performing (S201), based on data acquired by a first sensor regarding the dynamic object, three-dimensional reconstruction to obtain a three-dimensional reconstruction result corresponding to the dynamic object comprises:
Inputting (S1001) image acquired by the first sensor regarding the dynamic object into a neural network model, to output modeling parameters of the dynamic object via the neural network model; and
inputting (S1002) the modeling parameter into the three-dimensional reconstruction model, to output the three-dimensional reconstruction result of the dynamic object via the three-dimensional reconstruction model.

4. The method according to claim 2, wherein the performing (S201), based on data acquired by a first sensor regarding the dynamic object, three-dimensional reconstruction to obtain a three-dimensional reconstruction result corresponding to the dynamic object comprises:
extracting (S1003) a two-dimensional key point from the image acquired by the first sensor regarding the dynamic object;
triangulating (S1004) the two-dimensional key point to obtain a three-dimensional key point of the dynamic object; and
fitting (S1005) the three-dimensional key point using the three-dimensional reconstruction model to obtain the three-dimensional reconstruction result of the dynamic object.

5. The method according to any one of claims 1 to 4, wherein the predicting (S104) the driving risk corresponding to the dynamic object based on an interactive action between the dynamic object and the first static object comprises:
obtaining (S1041) a positional relationship between the dynamic object and the first static object;
determining (S1042), based on the positional relationship, the interactive action between the dynamic object and the first static object; and
predicting (S1043), based on the interactive action, the driving risk corresponding to the dynamic object.

6. The method according to any one of claims 1-5, wherein, after the predicting the driving risk corresponding to the dynamic object, the method further comprises:
in response to determining that the dynamic object has performed a prohibited action, making an alert for the prohibited action.

7. The method according to any one of claims 1 to 6, wherein, after the predicting the driving risk corresponding to the dynamic object, the method further comprises:
in response to determining that the interactive action between the dynamic object and the first static object occurs, storing first relevant information about the interactive action for analyzing whether the interactive action is a misoperation, wherein the first relevant information comprises: external environment information about the vehicle, motion information of the vehicle, the structure of the vehicle, and the three-dimensional reconstruction result corresponding to the dynamic object.

8. The method according to claim 7, further comprising:
in response to receiving an acquisition request of a user, obtaining second relevant information corresponding to an acquisition condition of the acquisition request from the first relevant information; and
determining, based on the second relevant information, whether there is a misoperation.

9. An apparatus for predicting a driving risk, **characterized by** comprising:
a first determination module (100) configured to determine a dynamic object for a vehicle while driving;
a second determination module (200) configured to determine a first position of the dynamic object in the vehicle;
a third determination module (300) configured to determine, based on the first position and a structure of the vehicle, a first static object in the vehicle corresponding to the dynamic object; and
a predictive module (400) configured to predict the driving risk corresponding to the dynamic object based on an interactive action between the dynamic object and the first static object.

10. The apparatus according to claim 9, further comprising:
an alarm module (600) configured to make an alert for the prohibited action, after predicting the driving risk corresponding to the dynamic object, in response to determining that a prohibited behavior has occurred for the dynamic object.

11. The apparatus according to claim 9, further comprising:
an analysis module (800) configured to obtain second relevant information corresponding to an acquisition condition of the acquisition request from the first relevant information in response to receiving an acquisition request of a user; and determine whether there is the misoperation based on the second relevant information.

12. A driving risk prediction system used during vehicle travel, **characterized by** comprising:
a first sensor disposed on the vehicle configured to acquire data for a dynamic object in the vehicle; and
the apparatus for predicting a driving risk according to claim 9, configured to determine, based on data acquired by the first sensor regarding the dynamic object, the dynamic object of the vehicle while driving; determine a first position of the dynamic object in the vehicle; determining, based on the first position and a structure of the vehicle, a first static object in the vehicle corresponding to the dynamic object; and predict the driving risk corresponding to the dynamic object based on an interactive action between the dynamic object and the first static object.

13. A vehicle, **characterized by** comprising: a processor (11), and a memory (12) communicatively connected to the processor, further comprising the apparatus for predicting a driving risk according to claim 9; wherein
the memory (12) is configured to store the processor-executable instructions; and
the processor (11) is configured to read the executable instructions from the memory, and execute the instructions to control the apparatus to implement the method for predicting a driving risk according to any one of claims 1 to 8.

14. A computer-readable storage medium **characterized by** storing a computer program, which, when executed by a processor, causes the processor to perform the method for predicting a driving risk according to any one of claims 1 to 8.

15. An electronic device, **characterized by** comprising:
a processor (11);
a memory (12) for storing processor-executable instructions;
wherein the processor (11) being used for reading the executable instructions from the memory (12) and performing the instructions to implement a method for predicting a driving risk according to any one of claims 1 to 8.

## Amended claims

### Amended claims in accordance with Rule 137(2) EPC.

1. A method for predicting a driving risk, **characterized by** comprising:
determining (S101) a dynamic object in a vehicle while driving;
determining (S102) a first position of the dynamic object in the vehicle;
determining (S103), in static objects in the vehicle based on the first position and a structure of the vehicle, a first static object corresponding to the dynamic object, wherein the static objects comprise a hardware system of the vehicle, and the first static object comprises a static object in contact with or close to the dynamic object; and
predicting (S104) the driving risk corresponding to the dynamic object based on an interactive action between the dynamic object and the first static object.

2. The method according to claim 1, wherein the determining (S102) a first position of the dynamic object in the vehicle comprises:
performing (S201), based on data acquired by a first sensor regarding the dynamic object, three-dimensional reconstruction to obtain a three-dimensional reconstruction result corresponding to the dynamic object;
generating (S202) a digital twin system corresponding to the vehicle based on modeling information about the vehicle and the three-dimensional reconstruction result corresponding to the dynamic object, wherein the digital twin system corresponding to the vehicle is constituted together by the static objects and the dynamic object; and
determining (S203) the first position of the dynamic object in the digital twin system from the three-dimensional reconstruction result.

3. The method according to claim 2, wherein the performing (S201), based on data acquired by a first sensor regarding the dynamic object, three-dimensional reconstruction to obtain a three-dimensional reconstruction result corresponding to the dynamic object comprises:
Inputting (S1001) image acquired by the first sensor regarding the dynamic object into a neural network model, to output modeling parameters of the dynamic object via the neural network model; and
inputting (S1002) the modeling parameter into the three-dimensional reconstruction model, to output the three-dimensional reconstruction result of the dynamic object via the three-dimensional reconstruction model.

4. The method according to claim 2, wherein the performing (S201), based on data acquired by a first sensor regarding the dynamic object, three-dimensional reconstruction to obtain a three-dimensional reconstruction result corresponding to the dynamic object comprises:
extracting (S1003) a two-dimensional key point from the image acquired by the first sensor regarding the dynamic object;
triangulating (S1004) the two-dimensional key point to obtain a three-dimensional key point of the dynamic object; and
fitting (S1005) the three-dimensional key point using the three-dimensional reconstruction model to obtain the three-dimensional reconstruction result of the dynamic object.

5. The method according to any one of claims 1 to 4, wherein the predicting (S104) the driving risk corresponding to the dynamic object based on an interactive action between the dynamic object and the first static object comprises:
obtaining (S1041) a positional relationship between the dynamic object and the first static object;
determining (S1042), based on the positional relationship, the interactive action between the dynamic object and the first static object; and
predicting (S1043), based on the interactive action, the driving risk corresponding to the dynamic object.

6. The method according to any one of claims 1-5, wherein, after the predicting the driving risk corresponding to the dynamic object, the method further comprises:
in response to determining that the dynamic object has performed a prohibited action, making an alert for the prohibited action.

7. The method according to any one of claims 1 to 6, wherein, after the predicting the driving risk corresponding to the dynamic object, the method further comprises:
in response to determining that the interactive action between the dynamic object and the first static object occurs, storing first relevant information about the interactive action for analyzing whether the interactive action is a misoperation, wherein the first relevant information comprises: external environment information about the vehicle, motion information of the vehicle, the structure of the vehicle, and the three-dimensional reconstruction result corresponding to the dynamic object.

8. The method according to claim 7, further comprising:
in response to receiving an acquisition request of a user, obtaining second relevant information corresponding to an acquisition condition of the acquisition request from the first relevant information; and
determining, based on the second relevant information, whether there is a misoperation.

9. An apparatus for predicting a driving risk, **characterized by** comprising:
a first determination module (100) configured to determine a dynamic object in a vehicle while driving;
a second determination module (200) configured to determine a first position of the dynamic object in the vehicle;
a third determination module (300) configured to determine, in static objects in the vehicle based on the first position and a structure of the vehicle, a first static object corresponding to the dynamic object, wherein the static objects comprise a hardware system of the vehicle, and the first static object comprises a static object in contact with or close to the dynamic object; and
a predictive module (400) configured to predict the driving risk corresponding to the dynamic object based on an interactive action between the dynamic object and the first static object.

10. The apparatus according to claim 9, further comprising:
an alarm module (600) configured to make an alert for the prohibited action, after predicting the driving risk corresponding to the dynamic object, in response to determining that a prohibited behavior has occurred for the dynamic object.

11. The apparatus according to claim 9, further comprising:
an analysis module (800) configured to obtain second relevant information corresponding to an acquisition condition of the acquisition request from the first relevant information in response to receiving an acquisition request of a user; and determine whether there is a misoperation based on the second relevant information.

12. A driving risk prediction system used during vehicle travel, **characterized by** comprising:
a first sensor disposed on the vehicle configured to acquire data for a dynamic object in the vehicle; and
the apparatus for predicting a driving risk according to claim 9, configured to determine, based on the data acquired by the first sensor regarding the dynamic object, the dynamic object in the vehicle while driving; determine a first position of the dynamic object in the vehicle; determine, in static objects in the vehicle based on the first position and a structure of the vehicle, a first static object corresponding to the dynamic object, wherein the static objects comprise a hardware system of the vehicle, and the first static object comprises a static object in contact with or close to the dynamic object; and predict the driving risk corresponding to the dynamic object based on an interactive action between the dynamic object and the first static object.

13. A vehicle, **characterized by** comprising: a processor (11), and a memory (12) communicatively connected to the processor, further comprising the apparatus for predicting a driving risk according to claim 9; wherein
the memory (12) is configured to store processor-executable instructions; and
the processor (11) is configured to read the executable instructions from the memory (12), and execute the instructions to control the apparatus to implement the method for predicting a driving risk according to any one of claims 1 to 8.

14. A computer-readable storage medium **characterized by** storing a computer program, which, when executed by a processor, causes the processor to perform the method for predicting a driving risk according to any one of claims 1 to 8.

15. An electronic device, **characterized by** comprising:
a processor (11);
a memory (12) for storing processor-executable instructions;
wherein the processor (11) being used for reading the executable instructions from the memory (12) and performing the instructions to implement a method for predicting a driving risk according to any one of claims 1 to 8.
